(19) Europäisches Patentamt
European Patent Office
Office européen des brevets

(11) **EP 3 554 854 B1**

(12) **EUROPEAN PATENT SPECIFICATION**

(45) Date of publication and mention
of the grant of the patent:
**18.11.2020 Bulletin 2020/47**

(51) Int Cl.:
***B60C 11/03*** (2006.01)

(21) Application number: **17822044.8**

(86) International application number:
**PCT/JP2017/045262**

(22) Date of filing: **18.12.2017**

(87) International publication number:
**WO 2018/117009 (28.06.2018 Gazette 2018/26)**

(54) **A TREAD FOR IMPROVING AERODYNAMICS**

LAUFFLÄCHE ZUR VERBESSERUNG DER AERODYNAMIK

BANDE DE ROULEMENT POUR AMÉLIORER L'AÉRODYNAMIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **19.12.2016 PCT/JP2016/087714**

(43) Date of publication of application:
**23.10.2019 Bulletin 2019/43**

(73) Proprietor: **Compagnie Générale des
Etablissements Michelin
63000 Clermont-Ferrand (FR)**

(72) Inventors:
• **GUIMARD, Bruno**
**Tokyo 163-1073 (JP)**
• **ANDO, Kiyoteru**
**Tokyo 163-1073 (JP)**
• **NOMURA, Masayoshi**
**Tokyo 163-1073 (JP)**

(74) Representative: **Regimbeau
20, rue de Chazelles
75847 Paris Cedex 17 (FR)**

(56) References cited:
**JP-A- H0 569 705    JP-A- H1 071 811**

## Description

[Technical Field]

The present invention relates to a tread for a tire, in particular to a tread for a tire for improving aerodynamic around tire.

[Background Art]

Tires are characterized as having energetic losses during rolling, which is referred to as rolling resistance. As rolling resistance increases, so does energy loss and the need to increase driving forces to maintain a particular rate of rotation. Therefore, there is a need to reduce rolling resistance and such the need is getting higher and higher.

WO99/65711 discloses a tire having a decoupling groove (a narrow circumferential groove) separating a tread and a sidewall tread.

WO2011/073312 also discloses a tire having a narrow circumferential groove acts as an articulation region between a tread and a sidewall. JPH10-071811A1 discloses a tire according to the preamble of claim 1. JPH05-069705 also discloses a tire according to the preamble of claim 1.

The decoupling groove and the narrow circumferential groove of these documents allow a better deformation of the tread inside a contact patch without being affected by sidewall deformation thus leading a lower rolling resistance of the tire.

[Citation List]

[Patent Literature]

[PTL 1]
WO99/65711
[PTL 2]
WO2011/073312
[PTL 3]
JPH10-071811
[PTL 4]
JPH05-069705

However with the solutions disclosed in these documents, the decoupling groove or the narrow circumferential groove creates a continuous edge on outside contour generated by a rotating tire which creates a separation of air flow around the tire causing a higher drag of a vehicle resulting unfavorable fuel consumption.

Therefore, there is a need for a tread for a tire which improves aerodynamic around the tire thus providing better fuel consumption.

Definitions:

A "radial direction/orientation" is a direction/orientation perpendicular to axis of rotation of the tire. This direction/orientation corresponds to thickness orientation of the tread.
An "axial direction/orientation" is a direction/orientation parallel to axis of rotation of the tire.
A "circumferential direction/orientation" is a direction/orientation which is tangential to any circle centered on axis of rotation. This direction/orientation is perpendicular to both the axial direction/orientation and the radial direction/orientation.
A "tire" means all types of elastic tire whether or not subjected to an internal pressure.
A "tread" of a tire means a quantity of rubber material bounded by lateral surfaces and by two main surfaces one of which is intended to come into contact with ground when the tire is rolling.
A "groove" is a space between two rubber faces/sidewalls which do not contact between themselves under usual rolling condition connected by another rubber face/ bottom. A groove has a width and a depth.
A "narrow (circumferential, short, etc.) groove" is a type of the groove whose width is relatively narrower than the groove. This narrow groove may, different from the groove, be partly or completely closed even under usual rolling condition.
A "contact patch" is a footprint of a tire mounted onto its standard rim as identified in tire standards such as ETRTO, JATMA or TRA, and inflated at its nominal or defined pressure and under its nominal or defined load.
A "shoulder region" of the tread is an axially outermost portion of the tread which do not contact with ground under usual rolling condition.
It is thus an object of the invention to provide a tread for a tire comprising at least one narrow circumferential groove, such the tread can provide improvement of aerodynamic around the tire thus contributes better fuel consumption of a vehicle.

[Summary of Invention]

The present invention provides a tread for a tire having a contact face intended to come into contact with ground during rolling, the tread being provided with a plurality of lateral groove extending generally axial orientation of the tread and at least one narrow circumferential groove at a shoulder region of the tread, the narrow circumferential groove being divided into a plurality of segment, each the segment having two ends, a first segment end and a second segment end being distant in circumferential orientation, a segment center at a center between the first segment end and the second segment end along the segment, a length $L$ between the first segment end and the second segment end along the segment and a width $E$, the segment center being axially outward from an axially outermost of a contact patch with a distance d when a tire with the tread being mounted onto its nominal rim, inflated to 180 kPa and 75% of nominal load being applied, a virtual straight line connecting the two ends of each the segment having an angle $\alpha$ with respect to the circumferential orientation, the angle $\alpha$ is greater than or equal to 5° and smaller than or equal to 25°, and the distance d is smaller than or equal to 5 mm, and an axial position of the first segment end of one segment and an axial position of the second segment end of circumferentially adjacent segment are distant in axial orientation.

This arrangement provides improvement of aerodynamic around the tire.

Since at least one narrow circumferential groove at the shoulder region of the tread is provided in a form of segment by dividing the narrow circumferential groove into the plurality of segment, the tread can deform better inside a contact patch without being affected by sidewall deformation, thus rolling resistance of the tire is improved.

Since each the segment has two ends, the first segment end and the second segment end and a segment center at a center between the first segment end and the second segment end along the segment and the segment center being axially outward from an axially outermost of a contact patch with a distance d when a tire with the tread being mounted onto its nominal rim, inflated to 180 kPa and 75% of nominal load being applied, quite whole part of each the segment would be out from the contact patch thus noise performance would be maintained.

If the segment center locates axially inward from the axially outermost of the contact patch, that is to say the distance d < 0, there is a risk that the segment would enter into the contact patch during rolling even partly which may create irregular noise. By setting the segment center axially outward from the axially outermost of the contact patch, quite whole part of each the segment would be out from the contact patch thus noise performance would be maintained.

This distance d is preferably more than or equal to 1 mm, more preferably more than or equal to 2 mm.

Since a virtual straight line connecting the two ends of each the segment has an angle $\alpha$ with respect to the circumferential orientation and the angle $\alpha$ is greater than or equal to 5° and smaller than or equal to 25°, it is possible to prevent creation of a continuous edge on outside contour with a rotating tire which results no separation of air flow around the tire thus aerodynamic around the tire would be improved leading lower drag of a vehicle resulting favorable fuel consumption.

If this angle $\alpha$ is smaller than 5°, there is a risk that the narrow circumferential groove creates the continuous or quasi-continuous edge on outside contour which still creates the separation of air flow around the tire. If this angle $\alpha$ is greater than 25°, there is a risk that rolling resistance is not lowered because deformation of the tread inside the contact patch would be affected by sidewall deformation. By setting this angle $\alpha$ greater than or equal to 5° and smaller than or equal to 25°, it is possible to prevent generation of air flow separation around the tire thus aerodynamic around the tire would be improved.

This angle $\alpha$ is preferably smaller than or equal to 23°, still more preferably smaller than or equal to 20°.

Since the distance d is smaller than or equal to 5 mm, it is possible to achieve improved rolling resistance and aerodynamic around the tire at the same time. If this distance d is more than 5 mm, there is a risk that the segment as the narrow circumferential groove is too far from the contact patch for leading better deformation of the tread inside the contact patch, thus rolling resistance improvement would be insufficient.

The length L of the segment is preferably greater than or equal to 10 mm and is smaller than or equal to 30 mm, more preferably smaller than or equal to 25 mm, and the width E of the segment is preferably greater than or equal to 1 mm and smaller than or equal to 5 mm.

Since an axial position of the first segment end of one segment and an axial position of the second segment end of circumferentially adjacent segment are distant in axial orientation, it is possible to change drastically an aesthetic of the tread in particular a better idea of off-road usage while improving aerodynamic around the tire.

In another preferred embodiment, each the segment satisfies following relationship:

[Math. 1]

$$\sin(\alpha) \times L > E$$

According to this arrangement, it is possible to avoid any edges of the segment of the narrow circumferential groove on outside contour with the rotating tire which results no separation of air flow around the tire, thus aerodynamic around the tire would effectively be improved.

In another preferred embodiment, the first segment end of one segment and the second segment end of circumferentially adjacent segment are connected.

According to this arrangement, it is also possible to change drastically an aesthetic of the tread while improving aerodynamic around the tire.

In another preferred embodiment, the lateral groove extends as to traverse the segment.

According to this arrangement, it is possible to change drastically an aesthetic of the tread in particular a better idea of off-road usage by adding additional edge toward circumferential orientation while improving aerodynamic around the tire.

In another preferred embodiment, the lateral groove extends as to connect the first segment end of one segment and the second segment end of circumferentially adjacent segment.

According to this arrangement, it is possible to change drastically an aesthetic of the tread in particular a better idea of off-road usage and of water evacuation capability while improving aerodynamic around the tire.

In another preferred embodiment, the first segment end of one segment and the second segment end of circumferentially adjacent segment are connected via a narrow short groove.

According to this arrangement, it is possible to change drastically an aesthetic of the tread in particular a better idea of off-road usage by adding additional edge toward circumferential orientation while improving aerodynamic around the tire.

[Advantageous Effects of Invention]

According to the arrangements described above, it is possible to provide a tread for a tire comprising at least one narrow circumferential groove, such the tread can provide improvement of aerodynamic around the tire thus contributes better fuel consumption of a vehicle.

[Brief Description of Drawings]

Other characteristics and advantages of the invention arise from the description made hereafter in reference to the annexed drawings which show, as nonrestrictive examples, the embodiment of the invention.

In these drawings:

[Fig. 1]

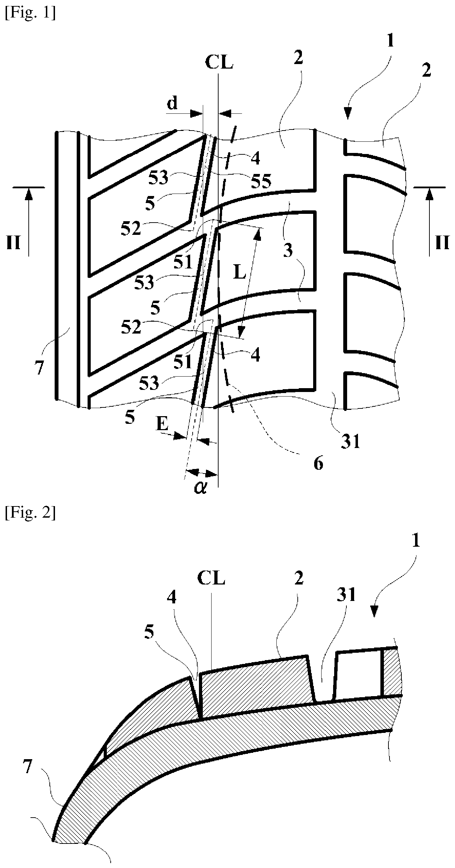

Fig. 1 is a schematic partial plan view of a tread according to a first embodiment of the present invention;
[Fig. 2]
Fig. 2 is a cross sectional view taken along line II-II in Fig. 1;
[Fig. 3]

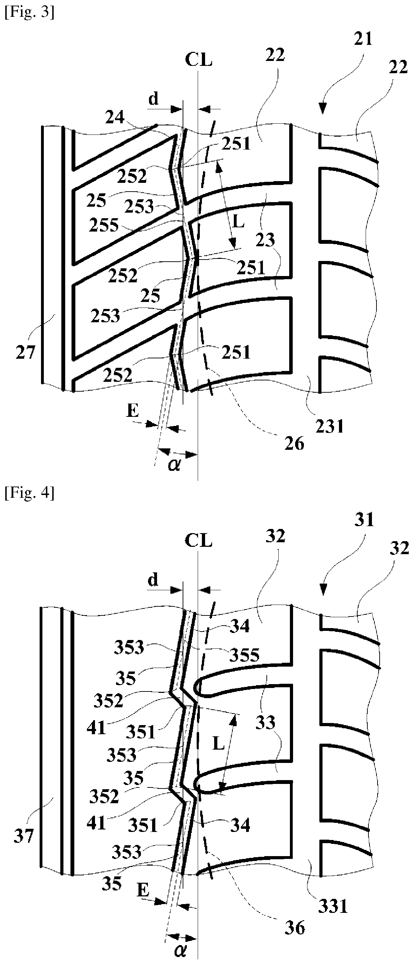

Fig. 3 is a schematic partial plan view of a tread according to a second embodiment of the present invention;
[Fig. 4]
Fig. 4 is a schematic partial plan view of a tread according to a third embodiment of the present invention;
[Fig. 5]

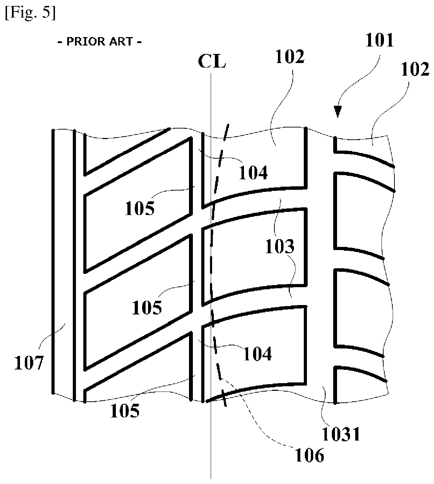

Fig. 5 is a schematic partial plan view of a tread according to prior art;

[Description of Embodiments]

Preferred embodiments of the present invention will be described below referring to the drawings.

A tread 1 for a tire according to a first embodiment of the present invention will be described referring to Figs. 1 and 2.

Fig. 1 is a schematic partial plan view of a tread according to a first embodiment of the present invention.

Fig.2 is a cross sectional view taken along line II-II in Fig. 1.

The tread 1 is a tread for a tire having dimension 205/60R16 and comprises a contact face 2 intended to come into contact with the ground during rolling, and a plurality of lateral groove 3 extending generally in axial orientation that is left-right orientation in Fig. 1. The tread 1 also comprises a circumferential groove 31 extending in circumferential orientation. The tread 1 is connected with a sidewall 7 at axially outermost of the tread 1.

When a tire with the tread 1 is mounted onto its nominal rim, inflated to 180 kPa and 75% of its nominal load is applied, a contact patch 6 is formed on an outer edge of the contact face 2 of the tread 1 contacting with the ground. In this Fig. 1, an axially outermost of the contact patch is indicated with a dashed line CL. According to 'ETRTO Standard Manual 2016', the standard rim for this size is 6.0J and the nominal load is 485 kg with inflation pressure of 180 kPa. At a shoulder region of the tread 1, a narrow circumferential groove 4 is provided.

The narrow circumferential groove 4 is divided into a plurality of segment 5, each the segment 5 has two ends, a first segment end 51 and a second segment end 52 being distant in circumferential orientation and a segment center 53 at a center between the first segment end 51 and the second segment end 52 along the segment 5. Each the segment 5 has a length L between the first segment end 51 and the second segment end 52 along the segment 5, and a width E. The segment center 53 is located axially outward from the axially outermost of the contact patch 6 with a distance $d$. A virtual straight line 55 connecting the two ends of each the segment 5 has a non-zero angle $\alpha$ with respect to the circumferential orientation, and the angle $\alpha$ is greater than equal to 5°. Each the segment 5 is designed as to satisfy following relationship:

[Math. 1]

$$\sin(\alpha) \times L > E$$

In the present embodiment, the distance $d$ which is preferably smaller than or equal to 5 mm, is 3 mm, the length $L$ which is preferably greater than or equal to 10 mm and smaller than or equal to 30 mm, is 24 mm, the width $E$ which is preferably smaller than or equal to 5 mm, is 2.4 mm, the distance $d$ which is preferably smaller than or equal to 5 mm, is 3.5 mm, the angle $\alpha$ which is preferably smaller than or equal to 25°, more preferably smaller than or equal to 23°, still more preferably smaller than or equal to 20°, is 10°, thus the segment 5 satisfies the relationship presented in the formula above.

An axial position of the first segment end 51 of one segment 5 and an axial position of the second segment end 52 of circumferentially adjacent segment 5 are distant in axial orientation, and the lateral groove 3 extends as to connect the first segment end 51 of one segment 5 and the second segment end 52 of circumferentially adjacent segment 5.

As shown in Fig. 2, the narrow circumferential groove 4 provided in the form of segment 5 has the same groove depth as the circumferential groove 31 and the lateral groove 3 (not shown), a sectional shape of the segment 5 is V-like shape for allowing the segment 5 of the narrow circumferential groove 4 being able to be closed during rolling, completely or even partly. The depth of each the segment 5 of the narrow circumferential groove is preferably more than or equal to 70% of the depth of the closest lateral groove 3, more preferably more than or equal to 80% and less than or equal to 100% of the depth of the closest lateral groove 3.

Since at least one narrow circumferential groove 4 at the shoulder region of the tread 1 is provided in a form of segment 5 by dividing the narrow circumferential groove 4 into the plurality of segment 5, the tread 1 can deform better inside a contact patch 6 without being affected by sidewall deformation, thus rolling resistance of the tire is improved.

Since each the segment 5 has two ends, the first segment end 51 and the second segment end 52 and the segment center 53 at a center between the first segment end 51 and the second segment end 52 along the segment 5 and the segment center 53 being axially outward from an axially outermost of the contact patch 6 with the distance d when a tire with the tread 1 being mounted onto its nominal rim, inflated to 180 kPa and 75% of nominal load being applied, quite whole part of each the segment 5 would be out from the contact patch 6 thus noise performance would be maintained.

Since a virtual straight line 55 connecting the two ends 51, 52 of each the segment 5 has the angle $\alpha$ with respect to the circumferential orientation and the angle $\alpha$ is greater than or equal to 5°, it is possible to prevent creation of a continuous edge on outside contour with a rotating tire which results no separation of air flow around the tire thus aerodynamic around the tire would be improved leading lower drag of a vehicle resulting favorable fuel consumption.

Since each the segment 5 satisfies following relationship:

[Math. 1]

$$\sin(\alpha) \times L > E$$

, it is possible to avoid any edges of the segment 5 of the narrow circumferential groove 4 on outside contour with the rotating tire which results no separation of air flow around the tire, thus aerodynamic around the tire would effectively be improved.

Since the angle $\alpha$ is smaller than or equal to 25°, it is possible to achieve improved rolling resistance and aerodynamic around the tire at the same time.

If this angle $\alpha$ is smaller than 5°, there is a risk that the narrow circumferential groove creates the continuous or quasi-continuous edge on outside contour which still creates the separation of air flow around the tire. If this angle $\alpha$ is greater than 25°, there is a risk that rolling resistance is not lowered because deformation of the tread inside the contact patch would be affected by sidewall deformation. This angle $\alpha$ is preferably smaller than or equal to 23°, still more preferably smaller than or equal to 20°.

This angle $\alpha$ should be considered as an absolute angle of each the segment 5 relative to circumferential orientation, independently with an inclination orientation of the segment 5.

Since the distance d is smaller than or equal to 5 mm, it is possible to achieve improved rolling resistance and aerodynamic around the tire at the same time.

Since an axial position of the first segment end 51 of one segment 5 and an axial position of the second segment end 52 of circumferentially adjacent segment 5 are distant in axial orientation, it is possible to change drastically an aesthetic of the tread 1 in particular a better idea of off-road usage while improving aerodynamic around the tire.

Since the lateral groove 3 extends as to connect the first segment end 51 of one segment 5 and the second segment end 52 of circumferentially adjacent segment 5, it is possible to change drastically an aesthetic of the tread 1 in particular a better idea of off-road usage and of water evacuation capability while improving aerodynamic around the tire.

A form of the segment 5 of the narrow circumferential groove 4 is not limited to straight form as this embodiment. The form of the segment 5 may be curved, waved or combination of several forms. Even such the case, the segment center 53 is at the center between the first segment end 51 and the second segment end 52 along the segment 5, the length L is the length between the first segment end 51 and the second segment end 52 along the segment 5, and the angle $\alpha$ is the angle of the virtual straight line 55 connecting the two ends of the segment 5, that is to say the virtual straight line 55 connecting between the first segment end 51 and the second segment end 52 of the same segment 5, with respect to the circumferential orientation. The angle $\alpha$ may vary among the segments 5 of the narrow circumferential groove 4.

The segment 5 of the narrow circumferential groove 4 may be provided with a chamfer or a radius at an intersection with the contact face 2, only one side of the segment 5 or both sides, completely or partly or combined. In such the case, the width E of the segment 5 of the narrow circumferential groove 4 is considered as a width at the contact face 2 including such the chamfer or the radius.

The width E of the segment 5 of the narrow circumferential groove 4 is not limited to the constant width as this embodiment. The width of the segment 5 may vary along extension of the segment 5 and in such the case average width is considered as the width $\underline{E}$ of the segment 5. The depth of the segment 5 of the narrow circumferential groove 4 may also vary along extension of the segment 5.

A groove or an incision may be provided from and opening to the segment 5 of the narrow circumferential groove 4 as to extend toward generally axial orientation of the tread 1.

The narrow circumferential groove 4 may be provided on both a shoulder region of the tread 1, or only on one of the shoulder region of the tread 1.

A tread 21 for a tire according to a second embodiment of the present invention will be described referring to Fig. 3. Fig. 3 is a schematic partial plan view of a tread according to the second embodiment of the present invention. The construction of this second embodiment is similar to that of the first embodiment other than the arrangement shown in Fig. 3, thus description will be made referring to Fig. 3.

In the second embodiment, a lateral groove 23 extends as to traverse a segment 25 of a narrow circumferential groove 24 as to a segment center 253 locates at an intersection of the segment 25 and the lateral groove 23, and a first segment end 251 of one segment 25 and a second segment end 252 of circumferentially adjacent segment 25 are connected.

Since the first segment end 251 of one segment 25 and the second segment end 252 of circumferentially adjacent segment 25 are connected, it is possible to change drastically an aesthetic of the tread 21 while improving aerodynamic around the tire.

Since the lateral groove 23 extends as to traverse the segment 25, it is also possible to change drastically an aesthetic of the tread 21 in particular a better idea of off-road usage by adding additional edge toward circumferential orientation while improving aerodynamic around the tire.

A tread 31 for a tire according to a third embodiment of the present invention will be described referring to Fig. 4. Fig. 4 is a schematic partial plan view of a tread according to the third embodiment of the present invention. The construction of this third embodiment is similar to that of the first embodiment other than the arrangement shown in Fig. 4, thus description will be made referring to Fig. 4.

In the third embodiment, a lateral groove 33 stops around an axially outermost of the contact patch indicated with a dashed line CL as to do not connect to a segment 35 of a narrow circumferential groove 34. An axial position of a first segment end 351 of one segment 35 and an axial position of a second segment 352 of circumferentially adjacent segment 35 are distant in axial orientation, and the first segment end 351 of one segment 35 and the second segment end 352 of circumferentially adjacent segment 35 are connected via a narrow short groove 41. The narrow short groove 41 has similar width as a width E of the segment 35 of the narrow circumferential groove 34.

When viewed in the axial orientation, two circumferentially adjacent segments 35 do not overlap each other. Two circumferentially adjacent segments 35 may overlap each other when viewed in the axial orientation and in such the case the narrow short groove 41 may be within the overlap of two circumferentially adjacent segments 35.

Since the first segment end 351 of one segment 35 and the second segment end 352 of circumferentially adjacent segment 35 are connected via a narrow short groove 41, it is possible to change drastically an aesthetic of the tread 31 in particular a better idea of off-road usage by adding additional edge toward circumferential orientation while improving aerodynamic around the tire.

The invention is not limited to the examples described and represented and various modifications can be made there without leaving the scope of the appended claims.

Fig. 5 is a schematic partial plan view of a tread according to prior art. In this Fig. 5, the tread 101 comprises a contact face 102 intended to come into contact with the ground during rolling, and a plurality of lateral groove 103 extending generally in axial orientation and a circumferential groove 1031 extending in circumferential orientation. The tread 101 is connected with a sidewall 107 at axially outermost of the tread 101. When a tire with the tread 101 is mounted onto its nominal rim, inflated to 180 kPa and 75% of its nominal load is applied, a contact patch 106 is formed on an outer edge of the contact face 102 of the tread 101 contacting with the ground. At a shoulder region of the tread 101, a narrow circumferential groove 104 is provided. The narrow circumferential groove 104 is extending in circumferential orientation, and is divided into a plurality of segment 105.

[Reference Signs List]

| 1, 21, 31 | tread |
| 2, 22, 32 | contact face |
| 3, 23, 33 | lateral groove |
| 31, 231, 331 | circumferential groove |
| 4, 24, 34 | narrow circumferential groove |
| 41 | narrow short groove |
| 5, 25, 35 | segment |
| 51, 251, 351 | first segment end |
| 52, 252, 352 | second segment end |
| 53, 253, 353 | segment center |
| 55, 255, 355 | virtual straight line |
| 6, 26, 36 | contact patch |
| 7, 27, 37 | sidewall |

**Claims**

1. A tread (1) for a tire having a contact face (2) intended to come into contact with ground during rolling, the tread (1) being provided with a plurality of lateral grooves (3) extending in a generally axial orientation of the tread (1) and at least one narrow circumferential groove (4) at a shoulder region of the tread (1), the narrow circumferential groove (4) being divided into a plurality of segments (5), each of the segments (5) having two ends, a first segment end (51) and a second segment end (52) being distant in circumferential orientation, a segment center (53) at a center between the first segment end (51) and the second segment end (52) along the segment (5), a length L between the first segment end (51) and the second segment end (52) along the segment (5) and a width $\underline{E}$, the segment center (53) being axially outward from the axially outermost of a contact patch (6) with a distance $\underline{d}$ when a tire with the tread (1) being mounted onto its nominal rim, inflated to 180 kPa and 75% of nominal load being applied, a virtual straight line (55) connecting the two ends of each segment (5) having an angle $\underline{\alpha}$ with respect to the circumferential orientation, the tread being **characterized in that** the angle $\underline{\alpha}$ is greater than or equal to 5° and smaller than or equal to 25°, and **in that** the distance $\underline{d}$ is smaller than or equal to 5 mm, and **in that** an axial position of the first segment end (51) of one segment (5) and an axial position of the second segment end (52) of a circumferentially adjacent segment are distant in axial orientation.

2. The tread (1) according to claim 1, **wherein** each segment (5) satisfies the following relationship:

[Math. 1]

$$\sin(\alpha) \times L > E$$

3. The tread (1) according to claim 1 or claim 2, **wherein** the first segment end (51) of one segment (5) and the second segment end (52) of a circumferentially adjacent segment are connected.

4. The tread (1) according to any one of the claims 1 to 3, **wherein** the lateral groove (3) extends so as to traverse the segment (5).

5. The tread (1) according to any one of the claims 1 to 4, **wherein** the lateral groove (3) extends so as to connect the first segment end (51) of one segment (5) and the second segment end (52) of a circumferentially adjacent segment.

6. The tread (1) according to claim 1, **wherein** the first segment end (51) of one segment (5) and the second segment end (52) of a circumferentially adjacent segment are connected via a narrow short groove (41).

7. The tread (1) according to claim 6, **wherein** the lateral groove (3) extends so as to traverse the segment (5).

8. A tire having a tread according to any one of the claims 1 to 7.

**Patentansprüche**

1. Lauffläche (1) für einen Reifen mit einer Kontaktfläche (2), die dazu bestimmt ist, beim Rollen mit dem Boden in Kontakt zu kommen, wobei die Lauffläche (1) mit einer Mehrzahl von seitlichen Rillen (3) versehen ist, die sich in einer allgemein axialen Ausrichtung der Lauffläche (1) erstrecken, und zumindest einer schmalen umlaufenden Nut (4) in einem Schulterbereich der Lauffläche (1), wobei die schmale umlaufende Nut (4) in eine Mehrzahl von Segmenten (5) unterteilt ist, wobei jedes der Segmente (5) zwei Enden hat, ein erstes Segmentende (51) und ein zweites Segmentende (52), die in umlaufender Richtung beabstandet sind, eine Segmentmitte (53) in einer Mitte zwischen dem ersten Segmentende (51) und dem zweiten Segmentende (52) entlang des Segments (5), eine Länge L zwischen dem ersten Segmentende (51) und dem zweiten Segmentende (52) entlang des Segments (5) und eine Breite E,
wobei die Segmentmitte (53) axial nach außen vom axial äußersten einer Kontaktfläche (6) mit einem Abstand d liegt, wenn ein Reifen mit der Lauffläche (1) auf seine Nominalfelge aufgezogen, auf 180 kPa aufgepumpt wird und 75% der Nennlast aufgebracht werden,
eine virtuelle gerade Linie (55), die die beiden Enden jedes Segments (5) verbindet, die einen Winkel $\alpha$ in Bezug auf die umlaufende Ausrichtung hat,
wobei die Lauffläche **dadurch gekennzeichnet ist, dass** der Winkel $\alpha$ größer als oder gleich 5° und kleiner als oder gleich 25° ist, und dass der Abstand d kleiner als oder gleich 5 mm ist, und dass eine axiale Position des ersten Segmentendes (51) eines Segments (5) und eine axiale Position des zweiten Segmentendes (52) eines umlaufenden anschließenden Segments in axialer Ausrichtung beabstandet sind.

2. Lauffläche (1) nach Anspruch 1, wobei jedes Segment (5) die folgende Beziehung erfüllt:

$$\sin(\alpha) \ \times \ L \ > \ E.$$

**3.** Lauffläche (1) nach Anspruch 1 oder Anspruch 2, wobei das erste Segmentende (51) eines Segments (5) und das zweite Segmentende (52) eines umlaufenden anschließenden Segments verbunden sind.

**4.** Lauffläche (1) nach einem der Ansprüche 1 bis 3, wobei sich die seitliche Rille (3) so erstreckt, dass sie das Segment (5) durchquert.

**5.** Lauffläche (1) nach einem der Ansprüche 1 bis 4, wobei sich die seitliche Rille (3) so erstreckt, dass sie das erste Segmentende (51) eines Segments (5) und das zweite Segmentende (52) eines umlaufenden anschließenden Segments verbindet.

**6.** Lauffläche (1) nach Anspruch 1, wobei das erste Segmentende (51) eines Segments (5) und das zweite Segmentende (52) eines umlaufenden anschließenden Segments über eine schmale kurze Nut (41) verbunden sind.

**7.** Lauffläche (1) nach Anspruch 6, wobei sich die seitliche Rille (3) so erstreckt, dass sie das Segment (5) durchquert.

**8.** Reifen mit einer Lauffläche nach einem der Ansprüche 1 bis 7.

**Revendications**

**1.** Bande de roulement (1) pour un pneu ayant une face de contact (2) prévue pour venir en contact avec le sol pendant le roulement, la bande de roulement (1) étant prévue avec une pluralité de rainures latérales (3) s'étendant dans une orientation généralement axiale de la bande de roulement (1) et au moins une rainure circonférentielle étroite (4) au niveau d'une région d'épaulement de la bande de roulement (1), la rainure circonférentielle étroite (4) étant divisée en une pluralité de segments (5), chacun des segments (5) ayant deux extrémités, une première extrémité de segment (51) et une seconde extrémité de segment (52) étant à distance dans l'orientation circonférentielle, un centre de segment (53) au niveau d'un centre entre la première extrémité de segment (51) et la seconde extrémité de segment (52) le long du segment (5), une longueur L entre la première extrémité de segment (51) et la seconde extrémité de segment (52) le long du segment (5) et une largeur E, le centre de segment (53) étant axialement vers l'extérieur depuis le plus axialement à l'extérieur d'une surface de contact (6) avec une distance d lorsqu'un pneu avec la bande de roulement (1) est monté sur sa jante nominale, gonflé à 180 kPa et 75 % de la charge nominale appliquée, une ligne droite virtuelle (55) raccordant les deux extrémités de chaque segment (5) ayant un angle $\alpha$ par rapport à l'orientation circonférentielle, la bande de roulement étant **caractérisée en ce que** l'angle $\alpha$ est supérieur ou égal à 5° et inférieur ou égal à 25°, et **en ce que** la distance d est inférieure ou égale à 5 mm, et **en ce qu'**une position axiale de la première extrémité de segment (51) d'un segment (5) et une position axiale de la seconde extrémité de segment (52) d'un segment circonférentiellement adjacent sont à distance dans l'orientation axiale.

**2.** Bande de roulement (1) selon la revendication 1, dans laquelle chaque segment (5) satisfait la relation suivante :

$$\sin(\alpha) \ \times \ L \ > \ E.$$

**3.** Bande de roulement (1) selon la revendication 1 ou la revendication 2, dans laquelle la première extrémité de segment (51) d'un segment (5) et la seconde extrémité de segment (52) d'un segment circonférentiellement adjacent sont raccordées.

**4.** Bande de roulement (1) selon l'une quelconque des revendications 1 à 3, dans laquelle la rainure latérale (3) s'étend afin de traverser le segment (5).

**5.** Bande de roulement (1) selon l'une quelconque des revendications 1 à 4, dans laquelle la rainure latérale (3) s'étend afin de raccorder la première extrémité de segment (51) d'un segment (5) et la seconde extrémité de segment (52) d'un segment circonférentiellement adjacent.

**6.** Bande de roulement (1) selon la revendication 1, dans laquelle la première extrémité de segment (51) d'un segment (5) et la seconde extrémité de segment (52) d'un segment circonférentiellement adjacent sont raccordées via une rainure courte étroite (41).

**7.** Bande de roulement (1) selon la revendication 6, dans laquelle la rainure latérale (3) s'étend afin de traverser le segment (5).

**8.** Pneu ayant une bande de roulement selon l'une quelconque des revendications 1 à 7.

[Fig. 1]

[Fig. 2]

[Fig. 3]

[Fig. 4]

[Fig. 5]

- PRIOR ART -

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9965711 A
- WO 2011073312 A
- JP H10071811 A
- JP H05069705 B

**Non-patent literature cited in the description**

- ETRTO Standard Manual. 2016